# EUROPEAN PATENT APPLICATION

(11) **EP 2 383 641 A2**
(43) Date of publication of application: **02.11.2011**
(21) Application number: 11163333.5
(22) Date of filing: 21.04.2011
(51) Int. Cl.: G06F 3/048

(54) **Adaptive virtual keyboard**

(30) Priority: 29.04.2010 US 769774
(71) Applicant: Sony Ericsson Mobile Communications AB, 221 88 Lund (SE)
(72) Inventor: Wickström, Olof, 224 68, Lund (SE)
(74) Representative: VALEA AB

(57) **Abstract**

A device may include a processor and a touch screen to display a soft keyboard. The processor may be configured to detect a touch within a touch-sensitive area within a first soft key of the soft keyboard, detect a keystroke corresponding to a second soft key of the soft keyboard, determine whether the second soft key is a backspace key, detect a keystroke corresponding to a third soft key of the soft keyboard when the processor determines that the second soft key is the backspace key, and adjust the touch-sensitive area when the processor determines that the first soft key neighbors the third soft key.

## Description

### BACKGROUND

Typically, soft keys, soft keyboards, and soft keypads are used in devices that do not provide a physical, alphanumeric keypad. In such a device, a user may select or activate a soft key, on a touch screen of the device, by touching a graphical user interface (GUI) area that corresponds to the soft key.

### SUMMARY

According to one aspect, a method may include detecting a touch within a touch-sensitive area of a first soft key displayed on a touch screen, detecting a keystroke corresponding to a second soft key displayed on the touch screen, determining whether the second soft key is a backspace key, and adjusting the touch-sensitive area when a device determines that the second soft key is the backspace key.

Additionally, adjusting the touch-sensitive area may include detecting a keystroke corresponding to a third soft key displayed on the touch screen when the device determines that the second soft key is the backspace key, determining whether the third soft key neighbors the first soft key, and adjusting the touch-sensitive area when the device determines that the third soft key neighbors the first soft key.

Additionally, adjusting the touch-sensitive area may include at least one of changing a size of the touch-sensitive area or changing a location of the touch-sensitive area.

Additionally, changing the location may include translating the touch-sensitive area away from the third soft key.

Additionally, changing the size of the touch-sensitive area may include decreasing the size of the touch-sensitive area.

Additionally, detecting the touch may include obtaining a location of the touch, identifying the first soft key based on the location, and storing, in a memory, coordinates corresponding to the location and an identity of the first soft key.

Additionally, the method may further include initializing the memory with a null value to indicate that no soft key has been touched before obtaining the location of the touch.

Additionally, the method may further include determining whether the first soft key is one of soft keys whose touch-sensitive areas are adjustable.

According to another aspect, a device may include a processor and a touch screen to display a soft keyboard. The processor may be configured to detect a touch within a touch-sensitive area within a first soft key of the soft keyboard, detect a keystroke corresponding to a second soft key of the soft keyboard, determine whether the second soft key is a backspace key, detect a keystroke corresponding to a third soft key of f the soft keyboard when the processor determines that the second soft key is the backspace key, and adjust the touch-sensitive area when the processor determines that the first soft key neighbors the third soft key.

Additionally, the device may include a tablet computer or a smart phone.

Additionally, the first soft key may include a soft key corresponding to a special character or an alphanumeric character.

Additionally, the device may further include an application to receive, from the soft keyboard, an alphanumeric character corresponding to the first soft key.

Additionally, the soft keyboard may include a QWERTY soft keyboard.

Additionally, the backspace key may be a delete key.

Additionally, when the processor adjusts the touch-sensitive area, the processor may be further configured to at least one of change a size of the touch-sensitive area or move the touch-sensitive area.

Additionally, the touch-sensitive area may be in shape of a circle, ellipse, rectangle, or square.

According to yet another aspect, a computer-readable storage device may include computer-executable instructions, for causing one or more processors to detect a touch within a touch-sensitive area within a first soft key of a soft keyboard displayed on a touch screen, detect a keystroke corresponding to a second soft key of the soft keyboard, determine whether the second soft key is a delete key, and adjust the touch-sensitive area when the one or more processors determine that the second soft key is not the delete key.

Additionally, the instructions for causing the one or more processors to adjust the touch-sensitive area may include instructions for causing the one or more processors to move the touch-sensitive to a location determined by averaging values of coordinates associated with the touch with values of coordinates of the touch-sensitive area.

Additionally, the computer-readable storage device may further include computer-executable instructions, for causing the one or more processors to determine whether the first soft key is one of soft keys whose touch-sensitive areas are adjustable.

Additionally, the soft keys may include alphanumeric keys.

### BRIEF DESCRIPTION OF THE DRAWINGS

The accompanying drawings, which are incorporated in and constitute a part of this specification, illustrate one or more embodiments described herein and, together with the description, explain the embodiments. In the drawings:

Fig. 1 is a diagram of an exemplary user device in which concepts described herein may be implemented;

Figs. 2A and 2B are front and rear views of the user device of Fig. 1 according to another implementation;

Fig. 3 is a block diagram of exemplary components of the user device of Fig. 1;

Fig. 4 is a block diagram of an exemplary functional component of the user device of Fig. 1;

Fig. 5A through 5C are expanded views of the exemplary soft keyboard of Fig. 1; and

Figs. 6 and 7 are flow diagrams of exemplary processes that are associated with a soft keyboard.

### DETAILED DESCRIPTION

The following detailed description refers to the accompanying drawings. The same reference numbers in different drawings may identify the same or similar elements. As used herein, the term "touch area" or "touch-sensitive area" may refer to an area within a key of a soft keyboard (e.g., QWERTY keyboard). When a user touches the touch-sensitive-area, the soft keyboard or the device on which the soft keyboard is installed may determine that the key is pressed or activated. The touch-sensitive area may be in the form of a circle, ellipse, square, rectangle, or any enclosed, two-dimensional geometrical shape. In addition, as used herein, depending on the context, the term "backspace key" may refer to any key (e.g., a delete key) or component (e.g., voice-activated component, gesture activated component, etc.) that erases a typed symbol or character.

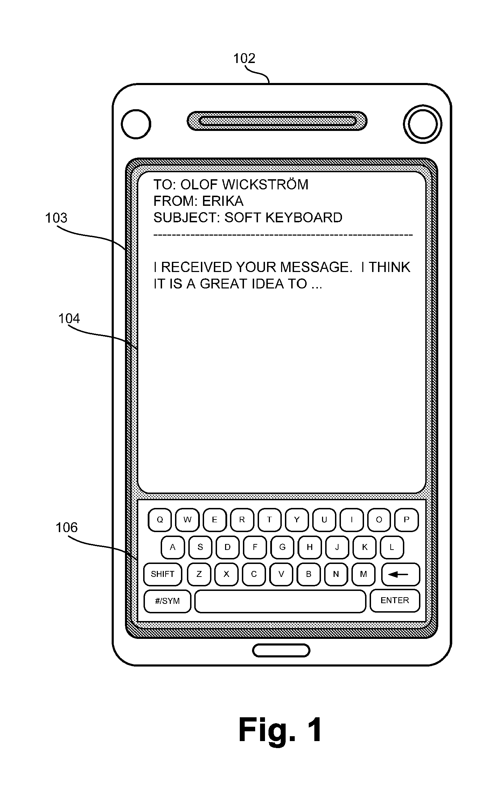

In the following, a soft keyboard may adjust, based on detected keystrokes, the sizes or relative positions/locations of touch-sensitive areas within soft keys. Fig. 1 is a diagram of an exemplary user device in which concepts described herein may be implemented.

As shown, user device 102 may include a display 103, which, in turn, includes a touch screen. Accordingly, display 204 may not only convey visual information to a user, but also receive user input. Depending on the application that is running on user device 102, display 204 may show different GUI components via which the user may provide input to user device 102.

For example, in Fig. 1, user device 102 is illustrated as running a messaging application that includes a message pane 104 and a soft keyboard 106. Message pane 104 may display a message that the user is viewing or composing. Soft keyboard 106 may emulate a physical keyboard based on user input provided through the touch screen. When the user touches a soft key on soft keyboard 106, the messaging application may receive from soft keyboard 106 an input character corresponding to the soft key. Subsequently, the messaging application may display the character in message pane 104.

In receiving user input, soft keyboard 106 may adjust the size and/or relative position of a touch-sensitive area within each key based on a sequence of keystrokes. For example, assume that the user presses, in sequence, a key corresponding to the letter "s" (s-key) and a backspace key. In such an instance, soft keyboard 106 may determine that soft keyboard 106 incorrectly interpreted user's keystroke and/or user mistyped a character, and adjust the touch-sensitive area within the s-key (e.g., decrease the size of the touch-sensitive area, move the touch-sensitive area within the s-key, etc.). This may allow soft keyboard 106 to increase the accuracy in correctly identifying keystrokes.

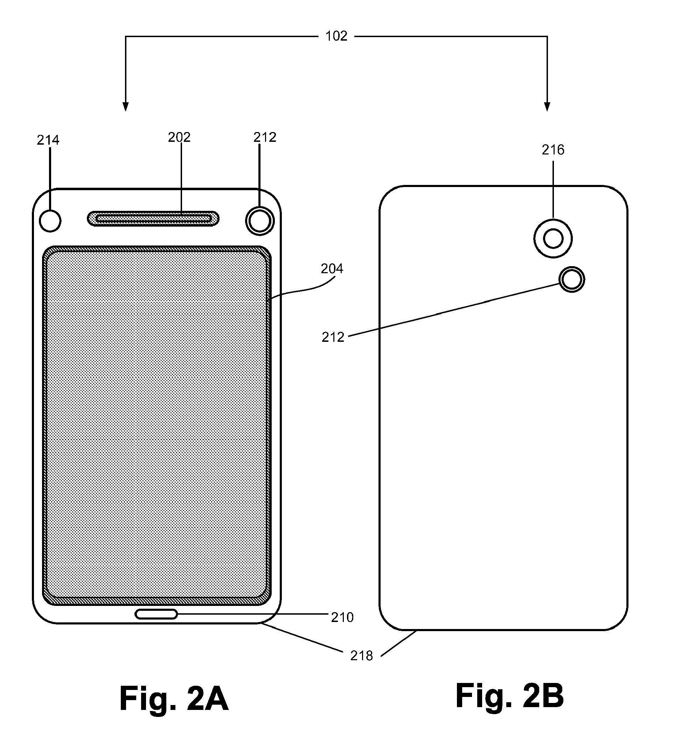

Figs. 2A and 2B are front and rear views, respectively, of user device 102. Typically, user device 102 may include any of the following devices with a touch screen: a tablet computer; a mobile telephone; a cellular phone; a personal communications system (PCS) terminal that may combine a cellular radiotelephone with data processing, facsimile, and/or data communications capabilities; a laptop; a personal digital assistant (PDA) that can include a telephone; a gaming device or console; a peripheral (e.g., wireless headphone); a digital camera; or another type of computational or communication device.

In this implementation, user device 102 may take the form of a portable phone (e.g., a cellular phone). As shown in Figs. 2A and 2B, user device 102 may include a speaker 202, display 204, microphone 210, sensors 212, front camera 214, rear camera 216, and housing 218. Speaker 202 may provide audible information to a user of user device 102. Display 204 may provide visual information to the user, such as an image of a caller, video images received via rear camera 216 or pictures. In addition, display 204 may include a touch screen via which user device 102 receives user input (e.g., keystrokes on soft keyboard 106).

Microphone 210 may receive audible information from the user and/or the surroundings. Sensors 212 may collect and provide, to user device 102, information (e.g., acoustic, infrared, etc.) that is used to aid the user in capturing images or in providing other types of information (e.g., a distance between a user and user device 102).

Front camera 214 and rear camera 216 may enable a user to view, capture and store, and process images (e.g., capture and decide a 2D barcode) of a subject in/at front/back of user device 102. Front camera 214 may be separate from rear camera 216 that is located on the back of user device 102. Housing 218 may provide a casing for components of user device 102 and may protect the components from outside elements.

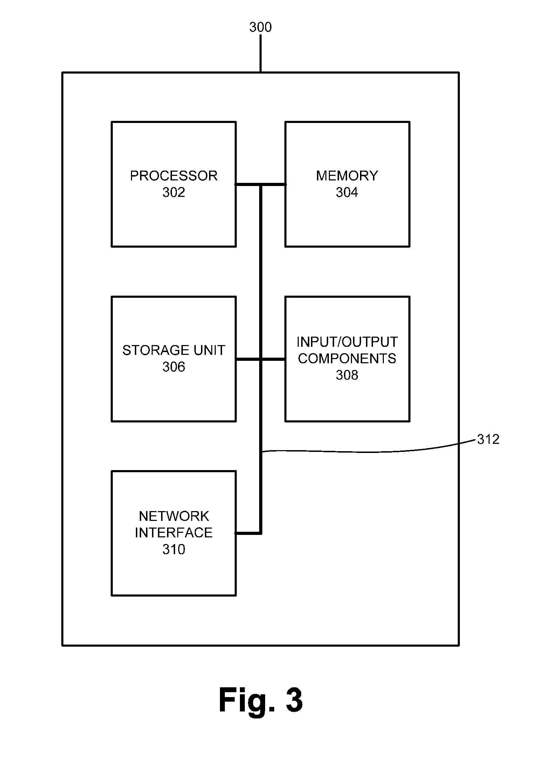

Fig. 3 is a block diagram of exemplary components of user device 102. As shown in Fig. 3, user device 102 may include a processor 302, a memory 304, storage unit 306, input/output components 308, a network interface 310, and a communication path 312.

Processor 302 may include a processor, a microprocessor, an Application Specific Integrated Circuit (ASIC), a Field Programmable Gate Array (FPGA), and/or other processing logic (e.g., audio/video processor) capable of processing information and/or controlling user device 102. Memory 304 may include static memory, such as read only memory (ROM), and/or dynamic memory, such as random access memory (RAM), or onboard cache, for storing data and machine-readable and/or executable instructions. Storage unit 306 may include storage devices, such as a floppy disk, CD ROM, CD read/write (R/W) disc, and/or flash memory, as well as other types of storage devices.

Input/output components 308 may include a display screen (e.g., display 204), a keyboard, a mouse, a speaker, a microphone, a Digital Video Disk (DVD) writer, a DVD reader, Universal Serial Bus (USB) port, and/or other types of components for converting physical events or phenomena to and/or from digital signals that pertain to user device 102.

Network interface 310 may include a transceiver that enables user device 102 to communicate with other devices and/or systems. For example, network interface 408 may communicate via a network, such as the Internet, a terrestrial wireless network (e.g., a WLAN), a cellular network, a satellite-based network, a wireless personal area network (WPAN), etc. Additionally or alternatively, network interface 310 may include a modem, an Ethernet interface to a LAN, and/or an interface/ connection for connecting user device 102 to other devices (e.g., a Bluetooth interface).

Communication path 312 may provide an interface through which components of user device 102 can communicate with one another.

In different implementations, user device 102 may include additional, fewer, or different components than the ones illustrated in Fig. 3. For example, user device 102 may include additional network interfaces, such as interfaces for receiving and sending data packets. In another example, a user device 102 may include subscriber identity module (SIM) or another type of card/device/component.

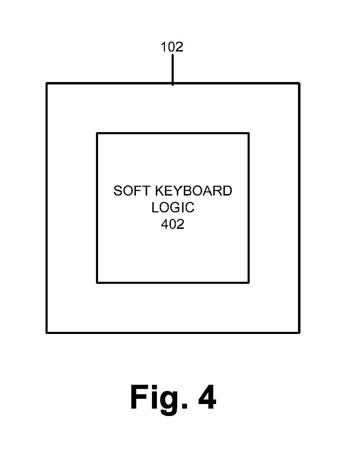

Fig. 4 is a block diagram of an exemplary functional component of user device 102. As shown, user device 102 may include soft keyboard logic 402. Because Fig. 4 is provided for simplicity and ease of understanding, Fig. 4 does not show or illustrate other components, such as an operating system, document application, game application, messaging application, etc.

Soft keyboard logic 402 may emulate a physical keyboard via a touch screen (e.g., display 204). Accordingly, soft keyboard logic may provide keyboard-like functionalities to applications and/or other components that typically require keyboard input. However, instead of providing input from a physical keyboard, soft keyboard logic 402 may provide input based on user keystrokes (e.g., contacts, touches, taps, etc.) on touch-sensitive areas of soft keyboard 106 displayed on a touch screen (e.g., display 204). Furthermore, based on the keystrokes, soft keyboard logic 402 may adjust the sizes and/or locations of the touch-sensitive areas within the soft keys.

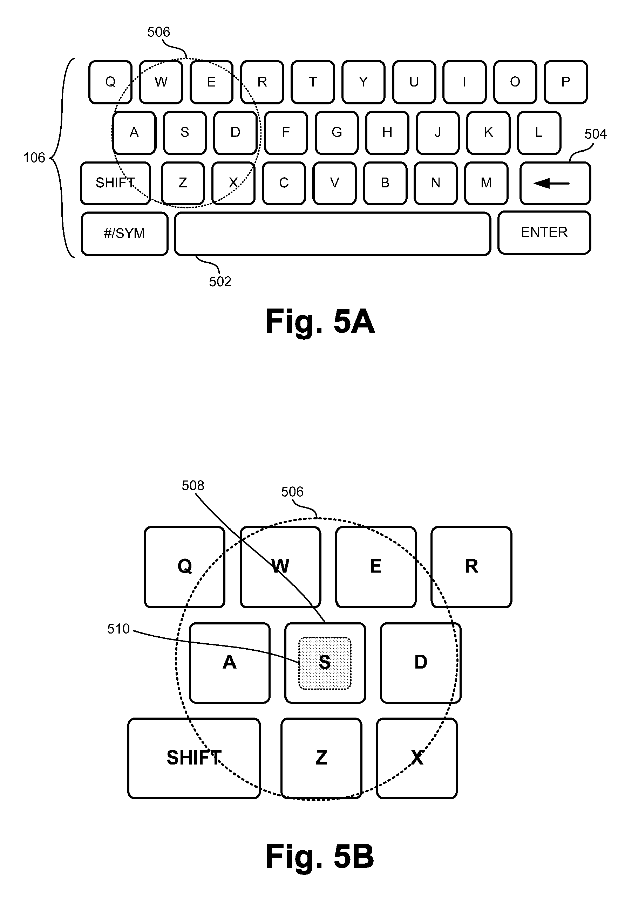

Figs. 5A through 5C are expanded views of soft keyboard 106. Figs. 5A through 5C also illustrate how soft keyboard 106 may adjust the sizes/locations of touch-sensitive areas. As shown in Fig. 5A, soft keyboard 106 may include a space key 502, backspace key 504, a delete key, return/enter key, and other keys corresponding to alphanumeric characters, symbols, etc.

Fig. 5B shows s-key 508 and a touch-sensitive area 510 within s-key 508. Although not shown in Fig. 5A or 5B for the purpose of simplicity, each of other keys may be associated with its own touch-sensitive area. When the user touches soft keyboard 106, a component (e.g., an operating system) of user device 102 may notify soft keyboard logic 402 of the location of the touch. Furthermore, based on the location, soft keyboard logic 402 may identify a key that is touched or pressed. For example, when the user presses touch-sensitive area 510, soft keyboard logic 402 may identify s-key 508.

Depending on the implementation, soft keyboard logic 402 may adjust the locations/sizes of touch-sensitive areas based on different key strokes. For example, in one implementation, soft keyboard logic 402 may decrease the size of a touch-sensitive area based on three consecutive three strokes on the following keys: a character key (e.g., s-key 508), backspace key 504, and a second character key that neighbors the first character key (e.g., one of the w-key, e-key, a-key, d-key, and z-key). That is, when the user types a first character, deletes the first character, and types another character to replace the first character, soft keyboard logic 402 may determine that it has incorrectly received the first character, and decrease the touch-sensitive area (e.g., touch-sensitive area 510).

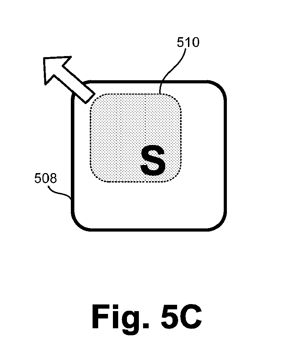

In a different implementation, soft keyboard logic 402 may change the location of the touch-sensitive area. For example, assume that the user presses s-key 508, backspace key 504, and the x-key. In addition, assume, based on the keystrokes, soft keyboard logic 402 determines that the letter s has been incorrectly typed in place of the letter x. In such a case, soft keyboard logic 402 may move the touch-sensitive area in the direction of the arrow illustrated in Fig. 5C, away from the letter x. That is, borders between touch-sensitive areas for the letter s and letter x may be adjusted (e.g., moved further apart). By adjusting the touch-sensitive area, soft keyboard logic 402 may avoid interpreting inadvertent touches as a valid keystroke.

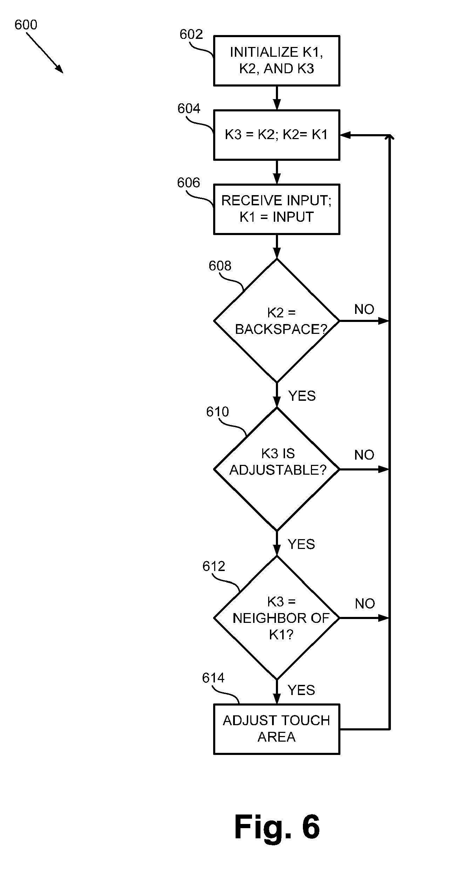

Fig. 6 is a flow diagram of an exemplary process 600 for adjusting a touch-sensitive area according to one implementation. In process 600, soft keyboard logic 402 may adjust the size/location of a touch-sensitive area when soft keyboard logic 402 determines, based on three consecutive keystrokes, that a character/symbol has been mistyped.

Process 600 may begin with soft keyboard logic 402 initializing or setting three locations in memory 304, herein labeled K1, K2, and K3, for caching or storing consecutive keystrokes on soft keyboard 106 (block 602). For example, soft keyboard logic 402 may initialize K1, K2, and K3 to a "NULL" value (e.g., a value indicating that K1, K2, or K3 does not currently store a value corresponding to a key).

Soft keyboard logic 402 may set the value of K3 to K2 and K2 to K1 (block 604). By setting the value at K3 to the value at K2 and then setting the value at K2 to the value at K1, soft keyboard logic 402 "slides" stored keystroke values in K3, K2, and K1, and prepares K1 to receive a new value corresponding to a newly pressed soft key. A "value," as used herein, may include identifiers corresponding to a detected keystroke and the location of a touch that resulted in the detection of the keystroke.

Soft keyboard logic 402 may detect an input key based on a touch within a touch-sensitive area of the key (block 606). As described above, depending on the location of user's touch, soft keyboard logic 402 may determine that the user has pressed or typed a particular key. Furthermore, soft keyboard logic 402 may store information identifying the key (e.g., a letter, symbol, number, etc.) and the location of the touch at K1 (e.g., display screen coordinates) (block 606).

Soft keyboard logic 402 may determine whether the value at K2 corresponds to the backspace key (block 608). If the value at K2 does not correspond to the backspace key (block 608 ― NO), soft keyboard logic 402 may determine that the key corresponding to the value stored at K3 has been correctly typed by the user, and proceed to block 604, to prepare to receive a new input keystroke. Otherwise (block 608 ― YES), soft keyboard logic 402 may determine whether the value stored at K3 corresponds to one of the keys whose touch-sensitive areas may be adjusted (block 610).

For example, assume that soft keyboard logic 402 is capable of adjusting touch-sensitive areas on the following keys: w-key, e-key, r-key, s-key, d-key, f-key, z-key, x-key, and c-key. In such an instance, soft keyboard logic 402 may determine whether the value stored at K3 corresponds to one of the w-key, e-key, r-key, s-key, d-key, f-key, z-key, x-key, and c-key. A different implementation of soft keyboard logic 402 (or soft keyboard 106) may include a different set of adjustable keys.

If the value stored at K3 does not correspond to one of the adjustable keys (block 610 ― NO), process 600 may return to block 604. Continuing with the preceding example, assume that the value stored at K3 represents the a-key. In such an instance, process 600 may return to block 604.

If the value stored at K3 corresponds to one of the adjustable keys (block 610 ― YES), soft keyboard logic 402 may determine whether the value stored at K1 corresponds to a key that neighbors the key corresponding to the value stored at K3 (block 612). If the value at K1 does not correspond to a key that neighbors the key corresponding to the value at K3 (block 610 ― NO), process 600 may return to block 604. For example, assume that the user pressed s-key 508, backspace key 504, and the r-key. In addition, assume that the values that correspond to s-key 508 and the r-key are stored at K3 and K1. The r-key is not a neighbor of s-key 508, and therefore, soft keyboard logic 402 may proceed to block 604.

If the value stored at K1 does correspond to a key that neighbors the key corresponding to the value at K3 (block 612 ― YES), process 600 may adjust the touch-sensitive area of the key corresponding to the value at K3 (block 614).

Adjusting the touch-sensitive area may entail adjusting the borders between one touch-sensitive area and another (e.g., increasing or decreasing the size of the area, rotating the area, and/or translating the area). For example, assume that the values at K3 and K1 correspond to s-key 508 and the x-key. In such an instance, soft keyboard logic 402 may move touch-sensitive area 510 away from the x-key in the direction shown by the arrow in Fig. 5C, such that soft keyboard logic 402 may more accurately detect/identify user keystrokes involving the letter x or s. In a different implementation, soft keyboard logic 402 may decrease the size of touch-sensitive area 510 to reduce the likelihood of incorrect input or misidentification of the keystroke.

In adjusting the touch-sensitive area, soft keyboard logic 402 may impose a limit on the maximum/minimum size of the area and on how much the area may be translated or rotated.

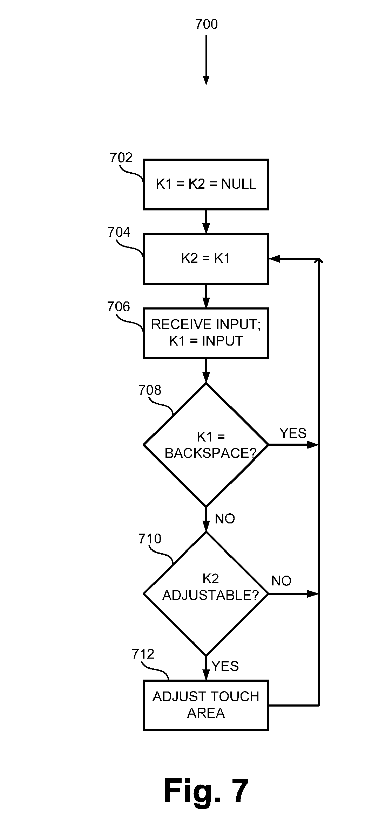

Fig. 7 is a flow diagram of an exemplary process 700 for adjusting touch-sensitive areas according to another implementation. In process 700, soft keyboard logic 402 may adjust the size/location of a touch-sensitive area when soft keyboard logic 402 determines, based on two consecutive keystrokes, that a specific character has been correctly typed.

Process 700 may begin with soft keyboard logic 402 initializing or setting two locations in memory 304, hereinafter labeled K1 and K2, for caching or storing two consecutive keystrokes on soft keyboard 106 (block 702). For example, soft keyboard logic 402 may initialize K1 and K2 to a "NULL" value.

Soft keyboard logic 402 may set the value at K2 to the value at K1 (block 704). By setting the value at K2 to the value at K1, soft keyboard logic 402 may allow K1 to receive a new value/information corresponding to an input key.

Soft keyboard logic 402 may detect/identify an input key based on a touch within a touch-sensitive area of the key (block 706). Furthermore, soft keyboard logic 402 may store information corresponding to the input key and the location of the touch at K1 (block 706).

Soft keyboard logic 402 may determine whether the value at K1 corresponds to the backspace key (block 708). If the value corresponds to the backspace key (block 708 ― YES), soft keyboard logic 402 may determine that the key corresponding to the value stored at K2 has not been correctly typed by the user and/or correctly identified by soft keyboard logic 402, and process 700 may proceed to block 704. Otherwise (block 708 -- NO), soft keyboard logic 402 may determine whether the value stored at K2 corresponds to one of the keys whose touch-sensitive area may be adjusted (block 710).

If the value stored at K2 does not correspond to one of the adjustable keys (block 710 ― NO), process 700 may return to block 704. Otherwise (block 710 ― YES), soft keyboard logic 402 may adjust the touch-sensitive area of the key corresponding to the value at K2 (block 712).

Adjusting the touch-sensitive area may entail moving the borders between one touch-sensitive area and another (e.g., decreasing the size of the area, rotating the area, and/or translating the area). For example, the coordinates of user's touch on the key corresponding to the value stored at K2 may be averaged with the current coordinates of the touch-sensitive area, to designate a new location for the touch-sensitive area (e.g., the location to which the touch-sensitive area may be moved). In another example, depending on the distance between the location of the user's touch and the center of the touch-sensitive area (e.g., the distance is greater than a threshold), soft keyboard logic 402 may enlarge or shrink the touch-sensitive area, to increase the likelihood of receiving a correct input or correctly identifying the keystroke.

### CONCLUSION

The foregoing description of implementations provides illustration, but is not intended to be exhaustive or to limit the implementations to the precise form disclosed. Modifications and variations are possible in light of the above teachings or may be acquired from practice of the teachings.

For example, in process 700, soft keyboard logic 402 may adjust the touch-sensitive area when soft keyboard logic 402 determines that a key has been correctly pressed or a keystroke has been correctly detected. In a different implementation, soft keyboard logic 402 may adjust the touch-sensitive area when soft keyboard logic 402 determines that the key has been incorrectly pressed or the keystroke has been incorrectly detected.

In another example, in some implementations, soft keyboard logic 402 may adjust a touch-sensitive area based one more than three key strokes. For example, a user may type two characters, backspace twice, and type a correct character. Subsequently, soft keyboard logic 402 may adjust the touch-sensitive area of the retyped letter.

In yet another example, processes 600 and 600 have been described with respect to a backspace key. In other implementations, in place of a backspace key, other keys or components for erasing one or more typed characters (e.g., a delete key, gesture based component or voice-activated for detecting input and erasing previously input character, etc.) may be used in place of the backspace key.

In the above, while series of blocks have been described with regard to the exemplary processes, the order of the blocks may be modified in other implementations. In addition, non-dependent blocks may represent acts that can be performed in parallel to other blocks. Further, depending on the implementation of functional components, some of the blocks may be omitted from one or more processes.

It will be apparent that aspects described herein may be implemented in many different forms of software, firmware, and hardware in the implementations illustrated in the figures. The actual software code or specialized control hardware used to implement aspects does not limit the invention. Thus, the operation and behavior of the aspects were described without reference to the specific software code ― it being understood that software and control hardware can be designed to implement the aspects based on the description herein.

It should be emphasized that the term "comprises/comprising" when used in this specification is taken to specify the presence of stated features, integers, steps or components but does not preclude the presence or addition of one or more other features, integers, steps, components, or groups thereof.

Further, certain portions of the implementations have been described as "logic" that performs one or more functions. This logic may include hardware, such as a processor, a microprocessor, an application specific integrated circuit, or a field programmable gate array, software, or a combination of hardware and software. No element, act, or instruction used in the present application should be construed as critical or essential to the implementations described herein unless explicitly described as such. Also, as used herein, the article "a" is intended to include one or more items. Further, the phrase "based on" is intended to mean "based, at least in part, on" unless explicitly stated otherwise.

## Claims

1. A method comprising:
detecting a touch (606) within a touch-sensitive area (510) of a first soft key displayed on a touch screen;
detecting a keystroke corresponding to a second soft key displayed on the touch screen;
determining whether the second soft key is a backspace key (608); and
adjusting the touch-sensitive area (510) when a device determines that the second soft key is the backspace key.

2. The method of claim 1, wherein adjusting the touch-sensitive area (510) includes:
detecting a keystroke corresponding to a third soft key displayed on the touch screen when the device determines that the second soft key is the backspace key (608);
determining whether the third soft key neighbors the first soft key; and
adjusting the touch-sensitive area when the device determines that the third soft key neighbors the first soft key.

3. The method of claim 1 or 2, wherein adjusting the touch-sensitive area (510) includes at least one of:
changing a size of the touch-sensitive area (510); or
changing a location of the touch-sensitive area (510).

4. The method of any one of claims 1 - 3, wherein changing the location includes:
translating the touch-sensitive area (510) away from the third soft key.

5. The method of any one of claims 1 - 4, wherein changing the size of the touch-sensitive area (510) includes:
decreasing the size of the touch-sensitive area (510).

6. The method of any one of claims 1 - 5, wherein detecting the touch includes:
obtaining a location of the touch;
identifying the first soft key based on the location; and
storing, in a memory (304), coordinates corresponding to the location and an identity of the first soft key.

7. The method of claim 6, further comprising:
initializing the memory (304) with a null value to indicate that no soft key has been touched before obtaining the location of the touch.

8. The method of claim 1, further comprising:
determining whether the first soft key is one of soft keys whose touch-sensitive areas (510) are adjustable.

9. A device (102) comprising:
a touch screen to display (204) a soft keyboard (106); and
a processor (302) to:
detect a touch within a touch-sensitive area within a first soft key of the soft keyboard (106);
detect a keystroke corresponding to a second soft key of the soft keyboard (106);
determine whether the second soft key is a backspace key (504);
detect a keystroke corresponding to a third soft key of the soft keyboard (106) when the processor (302) determines that the second soft key is the backspace key (504); and
adjust the touch-sensitive area when the processor (302) determines that the first soft key neighbors the third soft key.

10. The device (102) of claim 9, wherein the device (102) comprises a tablet computer or a smart phone.

11. The device (102) of claim 9 or 10, wherein the first soft key includes a soft key corresponding to a special character or an alphanumeric character.

12. The device (102) of any one of claims 9 - 11, further comprising:
an application to receive, from the soft keyboard (106), an alphanumeric character corresponding to the first soft key.

13. The device (102) of any one of claims 9 - 12, wherein the soft keyboard (106) includes:
a QWERTY soft keyboard.

14. The device (102) of any one of claims 9 - 13, wherein the backspace key (504) is a delete key.

15. The device (102) of any one of claims 9 - 14, wherein when the processor (302) adjusts the touch-sensitive area (510), the processor (302) is further configured to at least one of:
change a size of the touch-sensitive area (510); or
move the touch-sensitive area (510).
